Europäisches Patentamt

European Patent Office

Office européen des brevets

(19)

(11) Publication number: **0 221 183 B1**

(12) **EUROPEAN PATENT SPECIFICATION**

(45) Date of publication of patent specification: **01.04.92** (51) Int. Cl.5: **H01M 6/42, H01M 6/48**

(21) Application number: **86904498.2**

(22) Date of filing: **02.06.86**

(86) International application number:
**PCT/US86/01210**

(87) International publication number:
**WO 86/07495 (18.12.86 86/27)**

(54) **RECHARGEABLE SECONDARY BATTERY.**

(30) Priority: **04.06.85 US 741320**

(43) Date of publication of application:
**13.05.87 Bulletin 87/20**

(45) Publication of the grant of the patent:
**01.04.92 Bulletin 92/14**

(84) Designated Contracting States:
**BE CH DE FR GB IT LI NL SE**

(56) References cited:
| | |
|---|---|
| **DE-A- 3 231 243** | **FR-A- 640 781** |
| **FR-A- 1 092 426** | **GB-A- 2 150 741** |
| **US-A- 3 167 456** | **US-A- 3 844 837** |
| **US-A- 4 005 183** | **US-A- 4 027 077** |
| **US-A- 4 339 322** | |

(73) Proprietor: **THE DOW CHEMICAL COMPANY**
**2030 Dow Center Abbott Road P.O. Box 1967**
**Midland Michigan 48640-1967(US)**

(72) Inventor: **McCULLOUGH, Francis, P.**
**104 Fir Drive**
**Lake Jackson, TX 77566(US)**
Inventor: **SNELGROVE, Roy, V.**
**1921 Horth H Street**
**Freeport, TX 77541(US)**
Inventor: **LEVINE, Charles, A.**
**5869 Pine Hollow Road**
**Clayton, CA 94517(US)**

(74) Representative: **Smulders, Theodorus A.H.J.,**
**Ir. et al**
**Vereenigde Octrooibureaux Nieuwe Parklaan**
**97**
**NL-2587 BP 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a secondary rechargeable battery comprising a substantially hermetically sealed housing, at least one hydraulically impermeable partition dividing the housing into at least a pair of compartments, each compartment forming a cell containing an electrolyte of an ionizable salt in a non-aqueous liquid and at least a pair of spaced electrodes electrically insulated from one another, the first and the last cells of said battery containing a terminal electrode having a current collector associated therewith, at least one commonly shared, unitary electrode extending from one cell into an adjacent cell and having an intermediate portion which is hydraulically sealed in the cell partition to prevent the transfer of electrolyte from one cell to an adjacent cell while permitting the flow of current through said commonly shared electrode between said cells.

Such a battery is disclosed in French patent 1,092,426. This patent shows a battery having bipolar electrodes which exhibit a U-form. At the turning points these electrodes pass through isolating material. The two polarities are preferably separated by natural or synthetic waxes, pitches, paraffine, plastic materials and natural or synthetic rubbers. The electrodes per se are produced by coating a metallic grille at one side of the isolating material with an active negative material and at the other side with an active positive material.

It is an object of the present invention to provide for an improved rechargeable secondary battery having at least one commonly shared, unitary electrode.

According to the invention, the electrode is constructed of a carbonaceous material having a Young's modulus of from 6.9 to 380 GPa, and an aspect ratio of greater than 100 : 1.

The present invention also relates to a secondary rechargeable battery comprising a hermetically sealed housing, a plurality of spaced, substantially hydraulically impermeable, partitions dividing said housing into a pair of terminal compartments and at least one intermediate compartment, each compartment comprising a cell having a pair of opposed, planar, electrodes, the terminal compartments each containing a terminal electrode having a current collector, connected to an edge of the electrode and extending through a housing wall to the exterior of the housing, and an electrolyte comprising an ionizable salt in a non-aqueous liquid in each cell, wherein adjacent cells are provided with at least one commonly shared unitary electrode which is folded at an intermediate portion to form a pair of leg portions, one of said leg portions extending into one cell to form a first electrode, said intermediate portion being embedded in and hydraulically sealed in said hydraulically impermeable partition, and the other of said leg portions extending into an adjacent cell to form a second electrode in said adjacent cell, said intermediate hydraulically sealed portion permitting the flow of current from one leg portion to the other leg portion of said commonly shared electrode in adjacent cells, characterized in that said electrode is constructed of a carbonaceous material having a Young's modulus of from 6.9 to 380 GPa, and an aspect ratio of greater than 100 : 1.

Said commonly shared electrode is of a size sufficient to form an electrically effective electrode in each of said adjacent cell, thus forming a positive electrode in one cell and a negative electrode in the adjacent cell.

The first and the last cells in said cell series are generally defined as terminal cells and contain a terminal or end electrode which is provided with an electric current collector to provide a path for the charge of an electric current into and the discharge of an electric current out of said cell series.

The electric current collector is beneficially connected to the electrode, preferably at an edge portion of the electrode. An electric current conductor is preferably connected to the current collector and preferably extends to the outside of the housing to carry current to and from the cells of the battery.

Each cell is preferably provided with a foraminous, hydraulically permeable, separator positioned between each pair of electrodes of opposite polarity in a cell to maintain the electrodes in a spaced apart and electrically insulated relationship.

Each cell consists of a compartment in the housing which is separated from an adjacent cell by a hydraulically impermeable interior wall or partition. The commonly shared, unitary electrodes extend through the cell walls to electrically connect each cell to an adjacent cell. Each cell is provided with an electrolyte comprising an ionizable salt in a non-aqueous liquid.

An intermediate portion of each commonly shared electrode is potted or embedded into a potting section provided in the cell wall or within the material of the cell wall itself to embed and hydraulically seal the intermediate electrode portion within the cell wall and to seal each cell from its adjacent cell to prevent wicking or leakage of electrolyte from one cell to the adjacent cell through the commonly shared electrode.

A primary advantage of the present invention resides in the feature of a unitary electrode which can be made of a single material, i.e. a carbonaceous material. The unitary electrode is a commonly shared

2

electrode and consists of a current carrier per se which extends from one cell or compartment to an adjacent cell or compartment of a cell series. It is only the terminal or end electrodes of the battery of the invention that are provided with a current collector.

A further advantage of the battery of the invention resides in the simplicity of its design and the substantial space saving that is realized by the elimination of current collectors from the commonly shared electrodes.

Another advantage resides in the substantial cost advantages and savings that are realized by the elimination of a current collector from the commonly shared, intermediate, electrodes. Such current collector usually requires the application of a metal coating, e.g. copper, to at least one of the peripheral edges of the electrode, and internal or external connections to connect the electrodes in a series configuration. External connections, moreover, require the passage of the current conductors through a housing wall, adding to the overall problem of maintaining the battery housing hermetically sealed against the ingress of gases and vapors, particularly water vapor.

An additional advantage of the present cell design is that the cell is reversible, that is to say, the cell may be connected in a positive-negative manner and on recharge can be reversed to a negative-positive manner without damage to the electrodes.

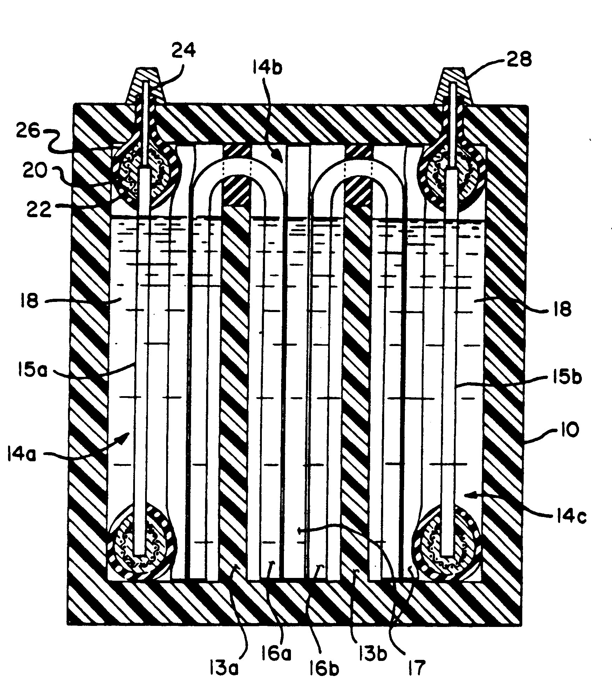

The single Figure illustrates, in cross-section, a preferred embodiment of a secondary battery constructed in accordance with the invention.

With particular reference to the drawing, there is provided a housing 10 which is constructed of a material to render it substantially hermetically impervious to the passage of gas therethrough, including particularity, water vapor. The housing 10 is provided with two internal cell walls or partitions 13a and 13b, defining within said housing a series of three cells 14a, 14b and 14c, respectively. The cell walls are preferably constructed of the same hydraulically impervious material as the housing walls. However, the cell walls 13a and 13b may be constructed of a material which is of a somewhat lesser gas or vapor impervious nature, requiring only that ions from the electrolyte cannot pass therethrough. Each cell 14a-14c contains a pair of electrodes, made from a carbonaceous material having properties which are defined hereinafter and which are also more fully defined in copending published French Patent Publication No. 2,556,138 entitled Energy Storage Device, published June 7, 1985, inventors, Francis P. McCullough, Jr., et al. Cell 14a is an end or terminal cell and contains a terminal electrode 15a and a commonly shared electrode 16a which extends from cell 14a through the housing wall 13a into the adjacent intermediate cell 14b. Cell 14b also contains a second commonly shared electrode 16b which extends from cell 14b through the housing wall 13b into an end or terminal cell 14c. The terminal cell also contains a terminal electrode 15b.

The commonly shared, unitary electrodes 16a and 16b are of a dimension such that they extend from one cell into an adjacent cell and such that the portions of each electrode extending into the adjacent cells having an opposite polarity. The electrodes 16a and 16b are shown as a unitary structural member or component which is bent or folded at an intermediate portion to form a pair of leg portions each of which extends into an adjacent cell. Further, while each commonly shared electrode is shown as a single, unitary sheet, film or cloth, one or both of the electrode leg portions may be further folded or pleated in a serpentine manner (with their hydraulically permeable separator extending between the pleats) to increase the total active electrode area in each cell. The electrodes in each cell are preferably separated from electrical contact with each other by a foraminous and hydraulically permeable separator member 17 which is capable of passing the electrolyte and ions. Various forms of separator materials may be employed, e.g. a fiberglass mat, polypropylene scrim or webbing as well as membrane such as ion exclusion membranes, and the like. It will be understood that the electrodes can be electrically insulated from each other by merely spacing the electrodes apart to provide a distance between the electrodes sufficient to prevent electrical contact between the electrodes.

An electrolyte 18 is provided in each cell. The preferred electrolyte is a mixture of an ionizable salt dissolved in a non-aqueous, electrically non-conductive liquid or paste. Alternatively, the electrolyte per se may be ionizable to some extent as well as any non-conducting solid through which ions will be transported under the influence of an electrical charge or discharge, as more fully explained in the copending application referred to hereinabove.

The electrically conductive carbonaceous material of the electrode should have the following physical properties:

(1) A Young's modulus of greater than 1,000,000 psi (6.9 GPa), preferably from 10,000,000 psi (69 GPa) to 55,000,000 psi (380 GPa), more preferably from 20,000,000 to 45,000,000 psi (138 GPa to 311 GPa).

(2) An aspect ratio of greater than 100:1. The aspect ratio is defined herein as the length to diameter (l/d) ratio of a fibrous or filament strand of the carbonaceous material, or as the length to depth ratio when the carbonaceous material is formed as a planar sheet.

(3) The structural and mechanical integrity of the carbonaceous material in whatever fabricated form it may be (sheet or film, woven or knitted cloth or non-woven sheeting made from continuous filament or staple fibers) must be such that it does not require the presence of a support such as a pressure plate (face films or mesh) to maintain the carbonaceous material in the desired sheet or plate like shapes throughout at least 100 charge/discharge cycles.

(4) A surface area with respect to fibrous materials of at least 0.1 $m^2/g$ but less than one associates with activated absorptive carbon. A surface area of less than 50 $m^2/g$, preferably less than 10 $m^2/g$, and more preferably less than a 5 $m^2/g$ is suitably employed for the carbonacious material of the invention.

(5) Sufficent integrity of the form of the carbonaceous material to enable the carbonaceous material to retain its plate or sheet-like shape when of a size greater than 1 $in^2$ (6.45 $cm^2$) to greater than 144 $in^2$ (930 $cm^2$) without any support, i.e. other than a metallic current collector frame along the peripheral edge portions of the terminal electrode.

Performance Criteria

(6) The carbonaceous material of an electrode should be capable of sustaining more than 100 electrical charge and discharge cycles without any appreciable damage due to flaking of the carbonaceous material. Preferably, no appreciable damage should occur after more than 500 electrical charge and discharge cycles, at a discharge capacity of greater than 150 coulombs per gram of carbonaceous material.

(7) The coulometric (coulombic) efficiency of the carbonaceous material of the electrode should be greater than 70 percent, preferably greater than 80 percent and most preferably greater than about 90 percent.

(8) The carbonaceous material of the electrode should be capable of sustaining deep electrical discharges of greater than 70 percent of its electrical charge capacity for at least 100 cycles of electrical charge and discharge, and preferably greater than 80 percent for more than 500 electrical charge and discharge cycles.

(9) The battery in which the electrodes of this invention are employed should be substantially free of water to the extent of less than 100 ppm. Preferably, the water content should be less than 20 ppm and most preferably less than 10 ppm. The battery of the invention is capable of operating with a water content of up to 300 ppm but will have a somewhat reduced cycle life. Further, it is to be understood that should the water content level become onerous, the battery may be disassembled, dried and reassembled in such dry state without substantial damage to its continued operability.

Accordingly, the carbonaceous material of an electrode having the physical properties hereinbefore described preferably should be capable of sustaining electrical discharge and recharge of more than 100 cycles at a discharge capacity of greater than 150 coulombs per gram of carbonaceous material in an electrode and at a coulometric efficiency of greater than 70 percent without any substantial irreversible change in dimensions (dimensional change of less than about 5 percent).

Usually, the carbonaceous material will be obtained by heating a precursor material to a temperature above 850°C until electrically conductive. Carbonaceous precursor starting materials capable of forming the electrically conductive carbonaceous material portion of the electrode may be formed from pitch (petroleum or coal tar), polyacetylene, polyacrylonitrile, polyphenylene, SARAN (Trade Mark), and the like. The carbonaceous precursor starting material should have some degree of skeletal orientation, i.e., the material should either have substantial concentrations of oriented benzenoid structural moieties or moieties which are capable of conversion, on heating, to benzenoid or equivalent skeletal orientation at or near the surface thereof (because of the skeletal orientation of the starting material).

Exemplary of preferred carbonaceous precursor materials which exhibit such skeletal orientation on heating are assemblies of multi- or monofilament strands or fibers prepared from petroleum pitch or polyacrylonitrile. Such multi- or monofilament strands or fibers are readily converted into threads or yarns which can then be fabricated into a sheet-like cloth or fabric. One technique for producing suitable monofilament fibers is disclosed in U.S. Patent No. 4,005,183 where the fibers are made into a yarn which is then woven into a cloth. The cloth is then subjected to a temperature, usually above 1000°C, sufficient to carbonize the cloth to make the carbonaceous material electrically conductive and so as to provide the material with the physical property characteristics hereinbefore described under paragraphs (1) through (6). Such a cloth, in conjunction with an electron collector, is particularly suitable for use as the terminal electrodes in the bipolar battery of the present invention. The bipolar commonly shared electrode of the invention may require a sizing or coating on the edges thereof to prevent fraying during assembly. Suitable plastic coating materials are, for example, polyethylene or Derakane brand curable vinyl ester epoxy resin

4

compositions.

Advantageously, the carbonaceous precursor material is in the form of a continuous filament or fiber, thread(s) constituted of continuous filament(s) or non-continuous fiber tow (yarn) which can be made into assemblies such as woven, non-woven, or knitted assemblies, or the staple fibers per se layered to form a cloth, paper-like or felt-like planar member. However, acceptable results are obtained when yarns made from short fibers (about l to l0 cm long) are woven or knitted into a cloth-like product (provided such short fibers still have, when heat treated, the required physical properties hereinbefore mentioned under (1) through (6)). It is, of course, to be understood that while it is advantageous to form the precursor material, preferably in a stabilized state (such as is obtained by oxidation), into the desired form (knit, woven or felt) prior to carbonization, such construction may be done after carbonization if the Young's modulus is below about 55,000,000 psi (380 GPa) and preferably below about 39,000,000 psi (269 GPa) for machine fabrication. It is to be understood that the carbonaceous material may also be formed from a film precursor.

It is also contemplated that the final form or shape of the carbonaceous material may be produced, e.g. a roll of a tubular or spirally shaped or pleated sheet material, and the material is subsequently carbonized. This technique is particularily advantageous if a woven, vis-a-vis a knitted fabric is to be employed, the latter being more flexible after carbonization than a woven material and is thus readily capable of being rolled up (as in a spiral jelly roll).

The degree of carbonization and/or graphitization does not appear to be a controlling factor in the performance of the material as an electrode except that it must be enough to render the material sufficiently electrically conductive. The degree of carbonization and/or graphitization should also be sufficient to provide the aforementioned physical and mechanical properties under the designated use conditions. Carbonaceous materials having about 90 percent carbonization are referred to in the literature as partially carbonized, while carbonaceous materials having from 91 to 98 percent carbonization are referred to in the literature as a carbonized material. Materials having a carbonization of greater than 98 percent are referred to as graphitized. It has surprisingly been found that carbonaceous materials having a degree of carbonization of from 90 to 99 percent have failed as an electrode material unless the carbonaceous material has the required dimensional stability during electrical charge and discharge cycling. For example, RPG graphite and GRAFOIL®, while having the requisite degree of carbonization, electrical conductivity and surface area, do not have the required physical properties of Young's Modulus and aspect ratio and thus have failed.

In accordance with the invention, a rechargable and polarity reversible battery can be prepared by aligning at least two pairs of electrodes, each electrode made from the aforedescribed carbonaceous material, the intermediate electrodes being bipolar as hereinbefore described and shared with adjacent cells, and the terminal electrodes being associated with an electron collector (which is electrically conductive), in a housing. The housing has an interior surface which is substantially impervious to moisture or gases. The electrodes are immersed in an electrolyte comprising an ionizable salt in a non-aqueous liquid which is contained in said housing. The liquid itself must be capable of forming, or contains dissolved therein, at least one ionizable metal salt. The terminal electrodes are provided with an electron collector which is preferably insulated against contact with the electrolyte.

In the construction of the battery of the invention, separators such as, for example separators made of fiberglass, polymeric materials, or composites of polymeric materials, may be employed to separate the positive and negative electrodes from each other. Preferably, a non-woven porous polypropylene sheet or a functionalized membrane is employed as the separator since it has the desired degree of porosity and yet has a sufficient tortuous flow path to prevent carbonaceous fibers from penetrating through it, thus preventing electrical shorting. The porous separators also beneficially act as stiffeners or supports for the electrodes during assembly.

Energy storage devices which are contained in fluid-tight housings are generally known in the art. Such housings may be suitably employed in the present invention as long as the housing material is electrically non-conductive or at least insulated from contact with one electrode and is impervious to gases and/or moisture (water or water vapor).

Materials which are compatible as a housing material include, for example, polyvinylchloride, polyethylene, polypropylene, polytrifluoroethylene and related perfluorinated polymers, instant set polymer (ISP), a rapidly solidifying reactive urethane mixture, the aramids, a metal sheet clad or coated with a non-conductive polymeric resinous material such as an epoxy e.g. DER*331 or with DERAKANE*a curable vinyl ester epoxy resin, ZETABON*a plastic-metal -plastic laminate and/or glass or a metal oxide, fluoride, or the like. Housing materials found not to be suitable in the preferred propylene carbonate electrolyte system include acrylics, polycarbonate and nylon. Acrylics and polycarbonates both craze and become extremely

*Trademark   of The Dow Chemical   Company

brittle, while nylon (except for the aramids) is chemically reactive.

In addition to being chemically compatible, a housing material must also offer an absolute barrier against the transmission of water vapor from the external environment of the housing (A transmission of less than 0.02 gram of $H_2O/yr/m^2$ is preferred). No presently known thermoplastic material alone offers this absolute barrier against moisture at a thickness which would be useful for a battery housing. At present only metals, such as for example, aluminum or mild steel, offer an absolute barrier against moisture at foil thicknesses. Aluminum foil having a thickness of greater than 0.0015 in. (0.038 mm) has been shown to be impervious to water vapor transmission. It has also been shown that when laminated to other materials, aluminum foil as thin as 0.00035 in. (0.009 mm) can provide adequate protection against water vapor transmission. Suitable housings made of a metal-plastic laminate, CED-epoxy-coated metal (cathodic electro deposited), or metal with an internal liner of a plastic material or glass presently satisfies the requirements for both chemical compatability and moisture barrier ability. Most of the cells and batteries built to date have been tested in either a dry box having a $H_2O$ level of >5 ppm, a glass cell or a double walled housing with the space between the walls filled with an activated molecular sieve, e.g. 5A zeolite.

The electrolyte preferably consists of an electrically non-conductive, chemically stable, non-aqueous solvent for an ionizable salt or salts wherein the ionizable salt is dissolved in the solvent. One can employ as the solvent those compounds that are generally known in the art such as, for example, compounds having oxygen, sulfur, and/or nitrogen atoms bound to carbon atoms in an electrochemically non-reactive state. Preferably, one can employ nitriles such as acetonitrile; amides such as dimethyl formamide; ethers, such as tetrahydrofuran; sulfur compounds, such as dimethyl sulfite; and other compounds such as propylene carbonate. It is, of course, to be understood that the solvent itself may be ionizable under conditions of use sufficient to provide the necessary ions in the solvent. Thus, the ionizable salt must be at least partially soluble and ionizable either when it is dissolved and goes into solution into the solvent or upon liquefaction. While it is to be understood that slightly soluble salts are operable, it will be recognized that the rate of electrical charging and discharging may be adversely affected by the low concentration of such salts in solution.

Ionizable salts which may be employed in the practice of the invention are those taught in the prior art and include salts of the more active metals, such as, for example, the alkali metal salts, preferably lithium, sodium or potassium, or mixtures thereof containing stable anions such as perchlorate ($ClO_4 =$), tetrafluoroborate ($BF_4 =$), hexafluoroarsenate ($AsF_6 =$), hexafluoroantimonate ($SbF_6 =$) or hexafluorophosphate ($PF_6 =$).

The electrolyte (solvent and salt) must be substantially water-free, that is, it should contain less than 100 ppm, preferably less than 20 ppm, most preferably less than 10 ppm of water. Of course, the electrolyte can be made up having more than the desired amount of water and dried as for example, over activated zeolite 5A molecular sieves. Such agents may also be combined into the finished battery to ensure that the low level water requirement is maintained. The electrolyte should also be such as to permit ions (anions and cations) of the ionizable salt to move freely through the solvent as the electrical potential of charge and discharge move the ions to and from their respective poles (electrodes).

The terminal electrodes, when constructed as a cloth or sheet, include an electron collector conductively associated with the carbonaceous fibers or sheet. The current collector, when made of a metal, is further protected by a material to insulate the collector and to substantially protect the electron collector from contact with the electrolyte. The protective material must, of course, be unaffected by the electrolyte. As more particularly shown in the drawing, the peripheral edge(s) of the terminal electrode(s) (l5a) and (l5b) is plated with a continuous bead (20) a metal or metal alloy such as copper, silver, or the like. A wire mesh (22) is folded over the initially plated peripheral bead and the plating continued until the wire mesh, preferably a copper wire mesh, is completely embedded within the bead. A current conductor (24) is connected to the edge of the terminal electrode and embedded within the metal bead. The plated edge of the electrode is then provided with an insulating coating (26) of a synthetic resinous material such as, for example, a Derakane resin. The conductor 24 extends through the housing wall and is provided with an electric current conducting terminal (28) externally of the housing.

The current collector intimately contacts the carbonaceous material of the electrode, preferably at least along one peripheral edge portion and more preferably on all peripheral edge portions thereof, i.e when the carbonaceous electrode is in the form of an assembly such as a planar sheet, film, or felt. It is also envisioned that the electrode may be constructed in other shapes such as in the form of a cylindrical or tubular bundle of fibers, threads or yarns in which the ends of the bundle are provided with a current collector. It is also apparent that an electrode in the form of a planar, sheet-like body, e.g. a woven or knitted cloth, can be rolled up with a porous separator between the layers of the planar, sheet-like body and with the opposed edges of the rolled up body connected to a current collector. While copper has been used as a current collector, any electro-conductive metal or alloy may be employed, such as, for example, silver, gold, platinum, cobalt, palladium, and alloys thereof. Likewise, while electrodeposition has been used in bonding a metal or metal alloy to the carbonaceous material, other coating techniques (including melt applications) or electroless deposition methods may be employed as long as the edges or ends of the electrode, including a majority of the fiber ends at the edges of the carbonaceous material are wetted by the metal to an extent sufficient to provide a low-resistant electrical contact and current path.

Collectors made from a non-noble metal, such as copper, nickel, silver or alloys of such metals, must be protected from the electrolyte and therefore are preferably coated with a synthetic resinous material or an oxide, fluoride or the like which will not be attacked by the electrolyte or undergo any significant degradation at the operating conditions of a cell.

In the present cell it is also possible to use inductive coils imbedded in the housing material connected to the end electrodes. Inductive coils may be used to charge/discharge the battery when no external connections are desired.

Example 1

In a representative example a 2.5 cm by 12.5 cm strip of Panex cloth (PWB-6) was sealed within a "Cellgard®" pocket. A pair of 5 cm square panels of Panex cloth were copper plated along each edge, a copper mesh screen was pressed over the copper plate on all four sides of each panel and the resulting structure again electroplated to embed the mesh in a copper plate coating. The copper plating was then coated with a Derakane® resin, an epoxy-vinyl ester resin, and cured. Each of the panels (electrodes) was placed in a polyethylene bag, the 12.5 cm strip was doubled over and an end placed in each bag. A 15 percent solution of $LiClO_4$ in propylene carbonate was added to each bag. The assembly was done in a dry box with all components having been dried prior to assembly. The entire assembly was left in the dry box over night, then placed on electrical charge at a voltage of 10.5 volts. The charge was 28.246 coulombs. Upon discharge the voltage was discharged down to 0.10 V through a 100 ohm resistance during a 45 minute period yielding 15 coulombs. This represents a 53 percent efficiency.

The low coulometric efficiency was attributed to contact of the electrolyte of one cell with the electrolyte of another cell due to wicking of the electrolyte over the commonly shared electrode extending between the two cells. This was prevented in later batteries by potting the cloth connection of the bipolar electrodes extending into adjacent cells with a bead of Derakane. Additional cycles were run. The results are set forth below:

TABLE

| Cycle % | Couloumbs | | Load (ohms) | eff. charge |
|---------|-----------|-----------|-------------|-------------|
| | Charge | Discharge | | |
| 1 | 28 | | 1000 | |
| | | 15 | 100 | 53% |
| 2 | 5I | | 500 | |
| | | 35 | 500 | 70% |
| 3 | 46 | | 500 | |
| | | 33 | 500 | 73% |
| 4 | 113 | | 1000 | |
| | | 65 | 1000 | 57% |
| 5 | 80 | | 500 | |
| | | 35 | 400 | 45 |
| 6 | 76 | | 150 | |
| | | 33 | 150 | 57% |

Example 2

A bipolar cell was constructed as shown in Figure I except four compartments were employed.

The end electrodes having a copper current collector protected by a Derakane® resin coating were I0 cm by II.25 cm active/carbonaceous material in contact with the electrolyte. The three center electrodes

were made from I0 cm by 25 cm pieces of graphite cloth which were enclosed in glass cloth bags. Each cloth bag was folded over to provide leg portions to be insertable into adjacent cells. Each pair of electrodes was inserted into a polyethylene bag to hold an electrolyte. The thickness of the entire assembly was 1.8 cm.

The electrolyte consisting of 30 cm$^3$ of a 15 percent LiClO$_4$ in propylene carbonate solution was added into each bag. This amount of electrolyte is equivalent to 1140 mA-hour of capacity. The end electrodes weighed 5.5 grams each, which, at a capacity of 250 coulombs per gram equals a capacity of 382 ma-hours.

This battery of 4 bipolar cells was charged and discharged repeatedly. Charging was conducted at 18.2 volts. Discharge was to battery terminal voltages as low as 7.6 volts. Battery resistance was about 12 ohms. Current densities as calculated for a terminal electrode having a dimension of 10 cm by 10 cm varied from 0.6 to 2.3 mA per cm$^2$.

### Example 3

A bipolar cell was constructed as in example 2 except that a Celgard® (a non-woven polypropylene separator) polymer separator was used instead of glass cloth. The total thickness across all four cells was approximately 1.0 cm. This cell was charged and discharged repeatedly. Charging was done at 20.1 volts. Open circuit voltage on full charge was 19.4 volts. Battery resistance is a minimum at full charge and was approximately 5 ohms. Discharge was to an open circuit voltage of about 10 volts. This cell used a Derakane® resin bead on the area of electrode fabric of the bipolar electrodes, at the point of juncture of the two adjacent cells. The results were improved over example I, especially in coulometric efficiency which was typically over 85 percent.

### Example 4

A two cell bipolar battery was prepared by sealing a pair of polypropylene sheets on their four edges to form a pocket and by cutting a slit through one side sheet midway thereof so that when folded in half along the slit, two pockets are formed. Two pieces of a Thornel® woven cloth having a dimension of 13.75 cm by 13.75 cm were each electroplated with copper on each of the four edges thereof. A five mesh copper wire screen was folded over each copper plated edge and the electroplating continued until the screen was completely embedded in copper. A wire was attached to each electrode and the copper plated edges and the wire were embedded in a Derakane® resin. These electrodes were inserted, one in each pocket. A Celgard® separator sheet having a dimension of I2.5 cm by I2.5 cm was attached about a I2.5 cm square of each end of a Panex® cloth having a dimension of 30 cm by I5 cm. The cloth was folded in half and potted in the area of the fold by a Derakane® potting resin leaving an active area of II.25 cm by II.25 cm. One end of the active area was placed in each cell so that the Celgard® separator sheet was positioned between the electrode having the collector frame and the adjacent electrode of the Panex® cloth. The Panex® cloth was provided with a bead of Derakane® potting resin along an intermediate portion of the cloth extending from one edge to an opposite edge of the cloth.

This assembly was placed in a double wall polyethylene bag and then in a plexiglass holder and set in a dry box for 48 hours.

A 15 percent LiClO$_4$ solution in propylene carbonate, which had been dried in a container filled with a dry, highly activated 5A molecular sieves for 48 hours, was used to fill the cells and the battery connected to a charger and alternatively to a variable resistance for discharge.

The battery was then operated over a varying time schedule of charge/discharge using different resistances and discharge cut-off voltages. After 55 cycles with a 2 ohm charge measuring resistance and a 52 ohm discharge load to a 3.43 volt cut-off, the coulometric efficiency was calculated to be 85.7 percent. After 65 cycles through the same 2 ohm charge resistance using a 102 ohm discharge resistance and a cutoff voltage of 3.02 the efficiency was 90 percent. After 74 cycles using a 2 ohm charge and 202 ohm discharge resistance to a cutoff voltage of 3.7 volts, the efficiency was calculated 80.3 percent. The above data illustrates the uniqueness of the construction of a rechargeable battery of the invention.

### Claims

1. A secondary rechargeable battery comprising a substantially hermetically sealed housing, at least one hydraulically impermeable partition dividing the housing into at least a pair of compartments, each compartment forming a cell containing an electrolyte of an ionizable salt in a non-aqueous liquid and at

8

least a pair of spaced electrodes electrically insulated from one another, the first and the last cells of said battery containing a terminal electrode having a current collector associated therewith, at least one commonly shared, unitary electrode extending from one cell into an adjacent cell and having an intermediate portion which is hydraulically sealed in the cell partition to prevent the transfer of electrolyte from one cell to an adjacent cell while permitting the flow of current through said commonly shared electrode between said cells, characterized in that said electrode is constructed of a carbonaceous material having a Young's modulus of from 6.9 to 380 GPa, and an aspect ratio of greater than 100 : 1.

2. The battery of claim 1, characterized in that the Young's modulus of said carbonaceous material is from 69 GPa to 311 GPa.

3. The battery of claim 1 or 2, characterized in that said carbonaceous material has a surface area of from 0.1 $m^2/g$ to less than 50 $m^2/g$.

4. The battery of claim 3, characterized in that said carbonaceous material has a surface area of from 0.1 $m^2/g$ to less than 10 $m^2/g$.

5. The battery of any one of the preceding claims, characterized in that said electrolyte comprises an alkali metal salt selected from lithium, sodium, potassium, or mixtures thereof in a non-aqueous solvent selected from perchlorate, tetrafluoroborate, hexafluoroarsenate, hexafluoroantimonate and hexafluorophosphate.

6. The battery of any one of the preceding claims, characterized by a hydraulically permeable and electrically non-conductive separator positioned between each pair of membranes in a cell for electrically insulating said electrodes from each other.

7. The battery of any one of the preceding claims, characterized in that said carbonaceous electrodes are assembled into a substantially planar, sheet-like electrode having at least one peripheral edge.

8. The battery of claim 7, characterized in that said sheet-like electrode is contructed of a knitted or woven cloth of fibers, a non-woven sheet made from randomly oriented fibers, or a continuous film, sheet, or plate.

9. The battery of any one of the preceding claims, characterized in that said commonly shared electrode is folded at said intermediate portion to form a mono-layer sheet electrode portion for each cell, and wherein one of said portions is folded to form a pleated electrode portion in one of said adjacent cells, and an electrically non-conductive, hydraulically permeable separator positioned between the pleats of said multi-layered portion.

10. The battery of any one of claims 1 to 8, characterized in that said commonly shared electrode is folded at said intermediate portion to form a mono-layer sheet electrode portion for each cell, and wherein both of said portions are folded to form pleated portions on opposite sides of said intermediate portion, said pleated portions being positioned in each of said adjacent cells, and an electrically non-conductive hydraulically permeable separator positioned between the pleats of each of said pleated electrode portions.

11. The battery of claim 9 or 10, characterized by at least a pair of commonly shared electrodes having at least a pair of permeable separators positioned between said electrodes, in a superimposed relationship, and wherein said superimposed electrodes and separators are folded at their intermediate portions and with at least one of said portions pleated.

12. The battery of claim 7 or 8, characterized in that said current collector for the terminal electrode, comprises a metal coating on at least one of the edges of said electrode, and wherein said metal coated edge is embedded in an insulating material.

13. The battery of claim 12, characterized by a current carrying conductor connected to at least one of the metal coated edges of said terminal electrode and extending through one of the housing walls in a sealed relationship with said housing wall.

**14.** The battery of claim 12, characterized in that at least one of the metal coated edges of said terminal electrode is embedded in the housing wall, and a current carrying conductor connected to said metal coated edge and extending to the exterior of said housing wall.

**15.** The battery of claim 12, characterized in that at least one edge portion of said terminal electrode is embedded in and extends through the housing wall, and wherein the metal coated electrode edge is positioned on the outside of said housing wall.

**16.** A secondary rechargeable battery comprising a hermetically sealed housing, a plurality of spaced, substantially hydraulically impermeable, partitions dividing said housing into a pair of terminal compartments and at least one intermediate compartment, each compartment comprising a cell having a pair of opposed, planar, electrodes, the terminal compartments each containing a terminal electrode having a current collector, connected to an edge of the electrode and extending through a housing wall to the exterior of the housing, and an electrolyte comprising an ionizable salt in a non-aqueous liquid in each cell, wherein adjacent cells are provided with at least one commonly shared unitary electrode which is folded at an intermediate portion to form a pair of leg portions, one of said leg portions extending into one cell to form a first electrode, said intermediate portion being embedded in and hydraulically sealed in said hydraulically impermeable partition, and the other of said leg portions extending into an adjacent cell to form a second electrode in said adjacent cell, said intermediate hydraulically sealed portion permitting the flow of current from one leg portion to the other leg portion of said commonly shared electrode in adjacent cells, characterized in that said electrode is constructed of a carbonaceous material having a Young's modulus of from 6.9 to 380 GPa, and an aspect ratio of greater than 100 : 1.

**Revendications**

**1.** Une batterie secondaire rechargeable comprenant un boîtier fermé de façon sensiblement hermétique, au moins une cloison hydrauliquement imperméable divisant le boîtier en au moins une paire de compartiments, chaque compartiment formant une cellule contenant un électrolyte d'un sel ionisable dans un liquide non aqueux et au moins une paire d'électrodes espacées, isolées électriquement l'une de l'autre, la première et la dernière cellules de ladite batterie contenant une électrode terminale à laquelle est associé un collecteur de courant, au moins une électrode d'un seul tenant, partagée en commun, s'étendant d'une cellule dans une cellule adjacente et comportant une partie intermédiaire qui est enfermée de façon hydrauliquement étanche dans la cloison de cellule pour empêcher le transfert d'électrolyte d'une cellule vers une cellule adjacente tout en permettant le passage du courant à travers ladite électrode partagée en commun entre lesdites cellules, caractérisée en ce que ladite électrode est en une matière carbonée dont le module d'Young est compris entre 6,9 et 380 GPa, et dont le rapport d'aspect est supérieur à 100:1.

**2.** **Batterie** selon la revendication 1, caractérisée en ce que le module d'Young de ladite matière carbonée est compris entre 69 et 311 GPa.

**3.** **Batterie** selon la revendication 1 ou 2, caractérisée en ce que la surface massique de ladite matière carbonée est comprise entre 0,1 $m^2/g$ et moins de 50 $m^2/g$.

**4.** **Batterie** selon la revendication 3, caractérisée en ce que la surface massique de ladite matière carbonée est comprise entre 0,1 $m^2/g$ et moins de 10 $m^2/g$.

**5.** **Batterie selon** l'une quelconque des revendications précédentes, caractérisée en ce que ledit électrolyte comprend un sel de métal alcalin choisi parmi le lithium, le sodium, le potassium ou des mélanges de ceux-ci dans un solvant non aqueux choisi parmi le perchlorate, le tétrafluoroborate, l'hexafluoroarsénate, l'hexafluoroantimonate et l'hexafluorophosphate.

**6.** **Batterie selon** l'une quelconque des revendications précédentes, caractérisée par un séparateur hydrauliquement perméable et électriquement non conducteur positionné entre chaque paire de membranes d'une cellule afin d'isoler électriquement lesdites électrodes les unes des autres.

7. **Batterie selon** l'une quelconque des revendications précédentes, caractérisée en ce que lesdites électrodes carbonées sont assemblées en une électrode en forme de feuille, sensiblement plane, comportant au moins un bord périphérique.

8. **Batterie** selon la revendication 7, caractérisée en ce que ladite électrode en forme de feuille consiste en une étoffe de libres tricotée ou tissée, une feuille non tissée faite de fibres orientées de façon aléatoire, ou une pellicule, une feuille ou une plaque continue.

9. **Batterie** selon l'une quelconque des revendications précédentes, caractérisée en ce que ladite électrode partagée en commun est pliée à ladite partie intermédiaire pour former une partie d'électrode en feuille à couche unique pour chaque cellule, et dans laquelle l'une desdites parties est pliée pour former une partie d'électrode repliée dans l'une desdites cellules adjacentes, et un séparateur électriquement non conducteur, hydrauliquement perméable est positionné entre les replis de ladite partie à couches multiples.

10. **Batterie selon** l'une quelconque des revendications 1 à 8, caractérisée en ce que ladite électrode partagée en commun est pliée à ladite partie intermédiaire pour former une partie d'électrode en feuille à couche unique pour chaque cellule, et dans laquelle lesdites parties sont toutes deux pliées pour former des parties repliées sur des côtés opposés de ladite partie intermédiaire, lesdites parties repliées étant positionnées dans chacune desdites cellules adjacentes, et un séparateur électriquement non conducteur hydrauliquement perméable est positionné entre les replis de chacune desdites parties d'électrodes repliées.

11. **Batterie** selon la revendication 9 ou 10, caractérisée par au moins une paire d'électrodes partagées en commun comportant au moins une paire de séparateurs perméables positionnés entre lesdites électrodes, dans une relation superposée, et dans laquelle lesdits électrodes et séparateurs superposés sont pliés à leurs parties intermédiaires, au moins l'une desdites parties étant repliée.

12. **Batterie** selon la revendication 7 ou 8, caractérisée en ce que ledit collecteur de courant de l'électrode terminale comprend un revêtement métallique sur au moins l'un des bords de ladite électrode, et dans laquelle ledit bord à revêtement métallique est encastré dans une matière isolante.

13. **Batterie** selon la revendication 12, caractérisée par un conducteur porteur de courant connecté à au moins l'un des bords à revêtement métallique de ladite électrode terminale et s'étendant à travers l'une des parois de boîtier dans une relation d'étanchéité avec ladite paroi de boîtier.

14. **Batterie** selon la revendication 12, caractérisée en ce qu'au moins l'un des bords à revêtement métallique de ladite électrode terminale est encastré dans la paroi de boîtier, et un conducteur porteur de courant est connecté auxdits bords à revêtement métallique et s'étend vers l'extérieur de ladite paroi de boîtier.

15. **Batterie** selon la revendication 12, caractérisée en ce qu'au moins une partie de bord de ladite électrode terminale est encastrée dans la paroi de boîtier et s'étend à travers elle, et dans laquelle le bord d'électrode à revêtement métallique est positionné sur l'extérieur de ladite paroi de boîtier.

16. **Une batterie** secondaire rechargeable comprenant un boîtier fermé de façon sensiblement hermétique, plusieurs **cloisons** espacées, sensiblement imperméables hydrauliquement, divisant ledit boîtier en une paire de compartiments terminaux et au moins un compartiment intermédiaire, chaque compartiment comprenant une cellule comportant une paire d'électrodes planes opposées, les compartiments terminaux contenant chacun une électrode terminale à laquelle est associé un collecteur de courant, connecté à un bord de l'électrode et traversant une paroi de boîtier vers l'extérieur du boîtier, et un électrolyte comprenant un sel ionisable dans un liquide non aqueux dans chaque cellule, dans laquelle des cellules adjacentes comportent au moins une électrode d'un seul tenant, partagée en commun qui est pliée à une partie intermédiaire pour former une paire de parties de pattes, l'une desdites parties de pattes s'étendant dans une cellule pour former un première électrode, ladite partie intermédiaire étant encastrée dans ladite **cloison** hydrauliquement imperméable et y étant fermée de façon hydrauliquement étanche, et l'autre desdites parties de pattes s'étendant dans une cellule adjacente pour former une deuxième électrode dans ladite cellule adjacente, ladite partie fermée de façon hydrauliquement étanche permettant le passage du courant d'une partie de patte à l'autre partie de patte de ladite électrode partagée en commun dans les cellules adjacentes, caractérisée en ce que ladite électrode est en une matière carbonée dont le module d'Young est compris entre 6,9 et 380 GPa, et dont le rapport d'aspect est supérieur à 100:1.

**Patentansprüche**

1.  Wiederaufladbare Sekundärbatterie, umfassend ein im wesentlichen hermetisch abgeschlossenes Gehäuse, mindestens eine hydraulisch undurchdringliche Scheidewand, die das Gehäuse in mindestens ein Paar Abteilungen unterteilt, wobei jede Abteilung eine Zelle bildet, die einen Elektrolyten eines ionisierbaren Salzes in einer nicht-wäßrigen Flüssigkeit und mindestens ein Paar im Abstand voneinander angeordnete, voneinander elektrisch isolierte Elektroden enthält, wobei die ersten und letzten Zellen der Batterie eine Endelektrode mit einem damit in Verbindung stehenden Stromkollektor enthalten, wobei sich mindestens eine gemeinsame einheitliche Elektrode von einer Zelle in eine benachbarte Zelle erstreckt und ein Zwischenteil aufweist, das in der Zellenscheidewand hydraulisch abgedichtet ist, um die Wanderung des Elektrolyten aus einer Zelle in eine benachbarte Zelle zu verhindern, während sie zwischen den Zellen den Stromfluß durch die gemeinsame Elektrode erlaubt, **dadurch gekennzeichnet,** daß die Elektrode aus einem kohlenhaltigen Material hergestellt ist, das einen Youngschen Modul von 6,9 bis 380 GPa und ein Aspektverhältnis von mehr als 100 : 1 aufweist.

2.  Batterie nach Anspruch 1, **dadurch gekennzeichnet**, daß der Youngsche Modul des kohlenhaltigen Materials von 69 GPa bis 311 GPa ist.

3.  Batterie nach Anspruch 1 oder 2, **dadurch gekennzeichnet,** daß das kohlenhaltige Material eine Oberfläche von 0,1 m²/g bis weniger als 50 m²/g aufweist.

4.  Batterie nach Anspruch 3, **dadurch gekennzeichnet**, daß das kohlenhaltige Material eine Oberfläche von 0,1 m²/g bis weniger als 10 m²/g aufweist.

5.  Batterie nach einem der vorhergehenden Ansprüche, **dadurch gekennzeichnet**, daß der Elektrolyt ein Alkalimetallsalz, ausgewählt aus Lithium, Natrium, Kalium oder Gemischen davon, in einem nicht-wäßrigen Lösungsmittel, ausgewählt aus Perchlorat, Tetrafluoroborat, Hexafluoroarsenat, Hexafluoroantimonat und Hexafluorophosphat, enthält.

6.  Batterie nach einem der vorhergehenden Ansprüche, **dadurch gekennzeichnet**, daß ein hydraulisch permeabler und elektrisch nicht leitfähiger Separator zwischen jedem Paar von Membranen in einer Zelle zur elektrischen Isolierung der Elektroden voneinander angeordnet ist.

7.  Batterie nach einem der vorhergehenden Ansprüche, **dadurch gekennzeichnet**, daß die kohlenhaltigen Elektroden zu einer im wesentlichen planaren, blattartigen Elektrode mit mindestens einer Umfangskante zusammengefügt sind.

8.  Batterie nach Anspruch 7, **dadurch gekennzeichnet,** daß die blattartige Elektrode aus einem gewirkten oder gewebten Faserstoff, einem ungewebten Blatt aus ungeordnet orientierten Fasern oder einem kontinuierlichen Film, Blatt oder einer kontinuierlichen Platte hergestellt ist.

9.  Batterie nach einem der vorhergehenden Ansprüche, **dadurch gekennzeichnet**, daß die gemeinsame Elektrode am Zwischenteil umgebogen ist, um ein einschichtiges Blattelektrodenteil für jede Zelle zu bilden, und worin eines der Teile umgebogen ist, um in einer der benachbarten Zellen ein gefaltetes Elektrodenteil zu bilden, und ein elektrisch nicht leitfähiger, hydraulisch permeabler Separator zwischen den Falten des mehrschichtigen Teils angeordnet ist.

10. Batterie nach einem der Ansprüche 1 bis 8, **dadurch gekennzeichnet,** daß die gemeinsame Elektrode am Zwischenteil umgebogen ist, um ein einschichtiges Blattelektrodenteil für jede Zelle zu bilden, und worin diese beiden Teile umgebogen sind, um gefaltete Teile auf entgegengesetzten Seiten des Zwischenteils zu bilden, wobei die gefalteten Teile in jeder der benachbarten Zellen angeordnet sind und ein elektrisch nicht leitfähiger, hydraulisch permeabler Separator zwischen den Falten von jedem der gefalteten Elektrodenteile angeordnet ist.

**11.** Batterie nach Anspruch 9 oder 10, **gekennzeichnet durch** mindestens ein Paar von gemeinsamen Elektroden mit mindestens einem Paar von permeablen Separatoren, die auf eine übereinandergelagerte Weise zwischen den Elektroden angeordnet sind, und worin die übereinandergelagerten Elektroden und Separatoren an ihren Zwischenteilen umgebogen sind und wobei mindestens eines der Teile gefaltet ist.

**12.** Batterie nach Anspruch 7 oder 8, **dadurch gekennzeichnet,** daß der Stromkollektor für die Endelektrode eine Metallbeschichtung auf mindestens einer der Kanten der Elektrode umfaßt und worin die metallbeschichtete Kante in ein Isolatormaterial eingebettet ist.

**13.** Batterie nach Anspruch 12, **gekennzeichnet durch** einen stromführenden Leiter, der mit mindestens einer der metallbeschichteten Kanten der Endelektrode verbunden ist und sich durch eine der Gehäusewände erstreckt und gegenüber der Gehäusewand abgedichtet ist.

**14.** Batterie nach Anspruch 12, **dadurch gekennzeichnet,** daß mindestens eine der metallbeschichteten Kanten der Endelektrode in der Gehäusewand eingebettet ist und ein stromführender Leiter mit der metallbeschichteten Kante verbunden ist und sich bis zur Außenseite der Gehäusewand erstreckt.

**15.** Batterie nach Anspruch 12, **dadurch gekennzeichnet,** daß mindestens ein Kantenteil der Endelektrode in die Gehäusewand eingebettet ist und sich hindurch erstreckt und worin die metallbeschichtete Elektrodenkante an der Außenseite der Gehäusewand angeordnet ist.

**16.** Wiederaufladbare Sekundärbatterie, umfassend ein hermetisch abgeschlossenes Gehäuse, eine Vielzahl von im Abstand angeordneten, im wesentlichen hydraulisch undurchdringlichen Scheidewänden, die das Gehäuse in ein Paar Endabteilungen und mindestens eine Zwischenabteilung unterteilen, wobei jede Abteilung eine Zelle umfaßt, die ein Paar von gegenüberliegenden, planaren Elektroden und einen Elektrolyten aufweist, der in jeder Zelle ein ionisierbares Salz in einer nicht-wäßrigen Flüssigkeit enthält, wobei die Endabteilungen jeweils eine Endelektrode mit einem Stromkollektor enthalten, der mit der Kante der Elektrode verbunden ist und sich durch eine Gehäusewand zur Außenseite des Gehäuses erstreckt, wobei benachbarte Zellen mit mindestens einer gemeinsamen einheitlichen Elektrode versehen sind, die an einem Zwischenteil umgebogen ist, um ein Paar von Fußteilen zu bilden, wobei sich eines der Fußteile in eine Zelle erstreckt, um eine erste Elektrode zu bilden, wobei das Zwischenteil in der hydraulisch undurchdringlichen Scheidewand eingebettet und hydraulisch abgedichtet ist, und sich das andere der Fußteile in eine benachbarte Zelle erstreckt, um eine zweite Elektrode in der benachbarten Zelle zu bilden, wobei das hydraulisch abgedichtete Zwischenteil den Stromfluß von einem Fußteil zum anderen Fußteil der gemeinsamen Elektrode in benachbarten Zellen erlaubt, **dadurch gekennzeichnet,** daß die Elektrode aus einem kohlenhaltigen Material hergestellt ist, das einen Youngschen Modul von 6,9 bis 380 GPa und ein Aspektverhältnis von mehr als 100 : 1 aufweist.